# EUROPEAN PATENT APPLICATION

(11) **EP 2 852 105 A1**
(43) Date of publication of application: **25.03.2015**
(21) Application number: 13425126.3
(22) Date of filing: 20.09.2013
(51) Int. Cl.: H04L 12/58

(54) **Computer system and related process supporting the communication of users located in the same geographical area, in order to establish a starting contact leading to a personal communication**

(71) Applicant: Di Tocco, Ignazio, 00040 Ardea (RM) (IT)
(72) Inventor: Di Tocco, Ignazio, 00040 Ardea (RM) (IT)
(74) Representative: Cardelli, Guido

(57) **Abstract**

Computer system and related process supporting the communication of users (107, 108, 109, 110) located in the same geographical area (100), in order to establish a starting contact leading to a personal communication, said system being characterized in that comprising:
- mobile computing means (101), like in example a *smartphone*, a *tablet PC*, a *iWatch* or a *personal computer*, comprising a software application (102) (App) that enables users to access to a remote server by internet and to interact with other users belonging to the same *social network* that have been previously registered through a registration process assigning them a *login* and *password*;
- means for storage and selection of users profiles, including information about: personal data (name, family name, address, birth date, etc.); contact data (telephone number, email address, internet website, contact by *Skype*, *Facebook*, *WhatsApp*, etc.); personal preferences (political views, religion, sports, sexual orientation, etc.); hobby and interests (books, sports, music, movies, etc.);
- means of selection and search (106) of users belonging to the same *social network*, located in the same geographical area (100), as detected by GPS electronics embedded in said mobile means (101), based on search parameters defined by a user, associated to some specific personal features searched in other users;
- means matching the features searched in other users with information of users profiles, related to users located in the same geographical area (100), where all or part of the users data are visualized on a list of search results, according to some previously selected privacy options;
- means of direct communication, through a system enabling exchange of messages belonging to the same software application (102) (App), or means of indirect communication through a system enabling notifications and transmission of contact data (telephone number, email address, internet website, contact by *Skype*, *Facebook*, *WhatsApp*, etc.).

## Description

The present invention regards a computer system and a related process supporting the communication of users located in the same geographical area, in order to establish a starting contact leading to a personal communication.

These activities regard a situation in which a user is the owner of a mobile computing device, that is one of the many available devices nowadays, like in example a *smartphone,* a *tablet PC* or a *personal computer,* the user is out on holidays, in example at the beach, in a city park, or in a turistic place, and he wants to meet up with new persons and find new friends.

It is known, indeed, that nowadays mobile computing devices can be connected to *internet* continuously, and can have inside some software applications (commonly known as App) that permit to embed some specific functions.

Usually, the user interface of such devices includes some icons placed on a desktop, and when these icons are touched through a touch screen they start the activation of one or more of these *software applications* (App). For example, some applications are known in order to make telephone calls, to send text messages, to manage the telephone book, up to arrive to the most complex that permit to browse on the internet, to play videogames, or to connect to web sites of *social network.*

Nowadays, a user who wants to use a mobile device, or more commonly a *smartphone* during the holidays to find new friends, could think to use a connection to a *social network* like *Facebook.* In order to find users who are in the same geographical area, he could enter some specific groups of users, like in example the users living in Rimini, or users attending a specific event, like the concert of the Pink Floyd in Rome. Afterwords, in a list of users within a specific range of age, or related to people having the same interests about hobbies and music, he could choose the ones in order to send a "request of friendship", hoping to receive a positive and quick answer, in order to establish a consequent direct communication and possibly a meeting by person.

This way to proceed results to be very difficult and hardly to be successful. In fact, this is the case where the request goes to unknown persons that do not expect to be contacted by strangers. Then, it is difficult to find the right people with the same interests and that are open with time to find new friends. Furthermore, it is difficult to establish a trustful relationship with unknown users leading them to meet up personally, taking in due account the existence in the society of weird and dangerous people.

A first attempt to overcome these drawbacks comes from the undersigned inventor, that in the European patent application EP 12425008 has proposed the use of a new electronic device particularly adapt to establish contacts of persons in the same geographic area in order to establish a first contact leading to personal communication.

In particular, this device works as a transceiver that detects other similar devices in a distance of 10-100 meters, and it provides an automatic communication according to search parameters defined by the user, related to specific personal features of the searched users, and according to filed users profiles comprising a set of personal information, like personal data (name, family name, address, birth date, etc.); contact data (telephone number, address, email, internet web site, etc.); personal preferences (political views, religion, sports, sexual orientation, etc.); hobbies and interests (books, sports, music, movies, etc.).

The device matches continuously the features of users in the same area with the search parameters that have been inserted and, in a positive case, sends an alert by a sound, by a green light, or by a message in a video screen.

However, this solution presents some drawbacks. The first one is the need to design and build a new electronic device *ad hoc*, implying some significant costs in order to produce on a large industrial scale. The second one is the need to create a market of these devices, implying a wide advertising and promotion campaign addressed to the general public, in order to achieve a "critical mass" of users that could make sense to use such a device (in fact, the use is based on the assumption that, at least in the cities, in a range of 10-100 meters there are always not less that ten users using the device). The third one is given by the use of an obsolete technology for detection of the user position, measuring the decay of energy in the electromagnetic waves: that leads to a weak precision measuring just a distance and not a divergence angle, to a big consumption of energy in the battery, and to a difficult installation inside device that should be as small as possible.

All the above drawback are overcome by the present invention, having as a main objective to propose a computer system using mobile computing means, like in example a *smartphone*, a *tablet PC*, an *iWatch* or a *personal computer,* comprising a software application (App) that enables users to access to a remote *server,* by *internet* connection, so that to achieve the communication of users located in the same geographical area, in order to establish a first contact leading to a personal communication.

Another objective is that the computer system uses the systems for detection of position embedded in the mobile computing means, like in example the GPS electronics, in order to find and represent on a map the geographical position of all the users that have been previously submitted to a registration process as belonging to the same *social network.*

Another further objective is that the computer system can accept the search requests from users belonging to the same social network, based on search parameters defined by the same users, related to specific personal features of the searched users.

Another objective is that the computer system matches the features searched in the users with the information from the user profiles related to the users located in the same geographical area, and that it provides a visualization of the search results, where all or part of the users data are available, according to some previously selected privacy options;

Another further objective is that the computer system provides a direct communication, through a system enabling exchange of messages belonging to the same software application (App), or an indirect communication through a system enabling notifications and transmission of contact data (telephone number, email address, internet website, contact by *Skype, Facebook, WhatsApp,* etc.).

Another further objective is that the computer system can accept the search requests from an advertising company or from commercial shops in the area, related to specific personal features of searched users, that have agreed to receive advertising messages; and that provides a visualization of a specific advertising message on said mobile computing means of the same searched users.

Another further objective is that the computer system comprises a radar system, embedded in said mobile computing means, that achieves a real time navigation to guide a user towards other users belonging to the same *social network* located in the same geographical area.

Therefore, it is specific subject of the present invention a computer system and related process supporting the communication of users located in the same geographical area, in order to establish a starting contact leading to a personal communication, said system being **characterized in that** comprising:
- mobile computing means, like in example a *smartphone*, a *tablet PC*, a *iWatch* or a *personal computer,* comprising a software application (App) that enables users to access to a remote server by internet and to interact with other users belonging to the same *social network* that have been previously registered through a registration process assigning them a *login* and *password*;
- means for storage and selection of users profiles, including information about: personal data (name, family name, address, birth date, etc.); contact data (telephone number, email address, internet website, contact by *Skype*, *Facebook*, *WhatsApp,* etc.); personal preferences (political views, religion, sports, sexual orientation, etc.); hobby and interests (books, sports, music, movies, etc.);
- means of selection and search of users belonging to the same *social network,* located in the same geographical area, as detected by GPS electronics embedded in said mobile means, based on search parameters defined by a user, associated to some specific personal features searched in other users;
- means matching the features searched in other users with information of users profiles, related to users located in the same geographical area, where all or part of the users data are visualized on a list of search results, according to some previously selected privacy options;
- means of direct communication, through a system enabling exchange of messages belonging to the same software application (App), or means of indirect communication through a system enabling notifications and transmission of contact data (telephone number, email address, internet website, contact by *Skype, Facebook, WhatsApp*, etc.).

The present invention will now be described for illustrative but not limitative purposes, according to its preferred embodiments, with particular reference to figures of the enclosed drawings, wherein:
Figure 1 is a schematic view of a terminal of a computer system supporting a communication, represented by a *tablet PC*, having a *software application* (App) that enables users to interact with other users belonging to the same *social network*;
Figure 2 is a schematic view of an aggregation map of users located in the same geographical area, collected according to specific personal features;
Figure 3 is a schematic view of a communication diagram involving users, where the first user starts a research based on specific personal features, and then establish a starting contact with other three users, in order to achieve a personal communication;
Figure 4 is a schematic view of a radar system, embedded in a *tablet PC*, that achieves a real time navigation to guide a user towards other users belonging to the same *social network.*

It is here underlined that only few of the many conceivable embodiments of the present invention are described, which are just some specific non-limiting examples, having the possibility to describe many other embodiments based on the disclosed technical solutions of the present invention.

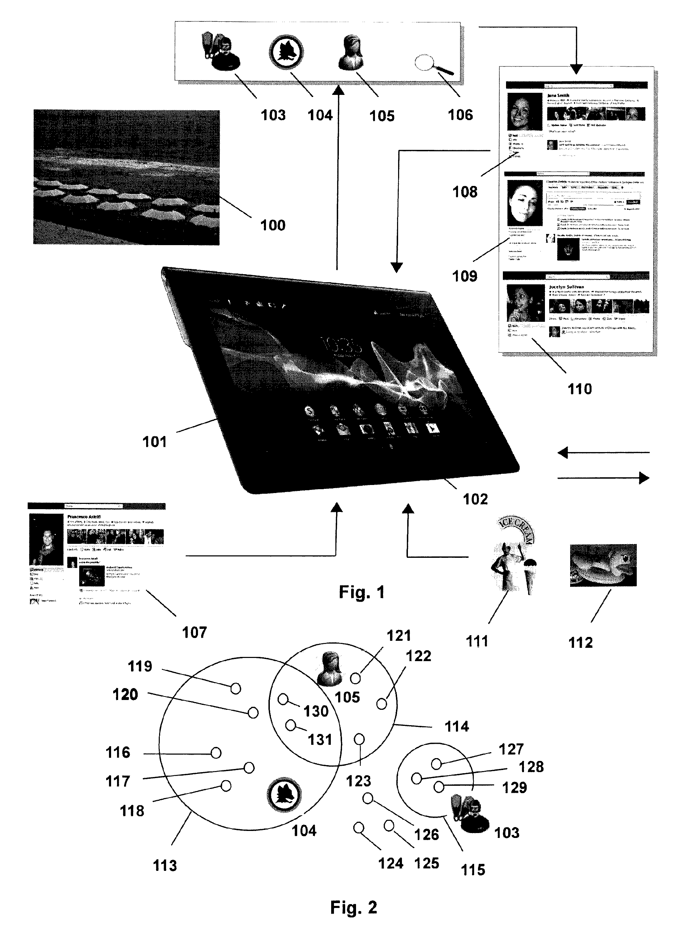

Figure 1 shows a terminal 101 of a computer system supporting the communication of users, represented by a *tablet PC*, comprising a software application 102 (App) that enables users to access to a remote *server* by internet and to interact with other users belonging to the same *social network* in order to establish a starting contact leading to a personal communication. All the users 107, 108, 109, 110 are located in the same geographical area 100, for example at the beach, and use the *application software* 102 (App) to access to a remote *server* by *internet.* They have been previously registered through a registration process assigning them a *login* and *password.*

The computer system provides the storage and selection of users profiles, including information about: personal data (name, family name, address, birth date, etc.); contact data (telephone number, email address, internet website, contact by *Skype*, *Facebook*, *WhatsApp*, etc.); personal preferences (political views, religion, sports, sexual orientation, etc.); hobby and interests (books, sports, music, movies, etc.). The computer system provides the selection and search 106 of users belonging to the same *social network,* located in the same geographical area 100, and therefore to the same beach, as detected by GPS electronics embedded in said mobile means 101, based on search parameters defined by a user, associated to some specific personal features searched in other users. For example, user 107 can choose as a search parameter all the persons at the same beach being female 105, that live in Rome 104, and that have the hobby of fishing by underwater diving 103.

The computer system provides the matching of features searched in other users, that is female persons 105, living in Rome 104, that have the hobby of fishing by underwater diving 103,with information of users profiles, related to users 107, 108, 109, 110 located in the same geographical area 100, where all or part of the users data are visualized on a list of search results, according to some previously selected privacy options.
Figure 2 shows users located in the same geographical area as represented on an aggregation map and collected according to specific personal features, for example the users 119, 120, 116, 117, 118, 113, 130, 131 belong to a set 113 and they all live in Rome 104, the users 121, 122, 123, 130, 131 belong to a set 114 and they all are females 105, the users 127, 128, 129 belong to a set 115 and they all have the hobby of fishing by underwater diving 103. Instead, the users 124, 125 and 126 do not belong to any of the above sets.

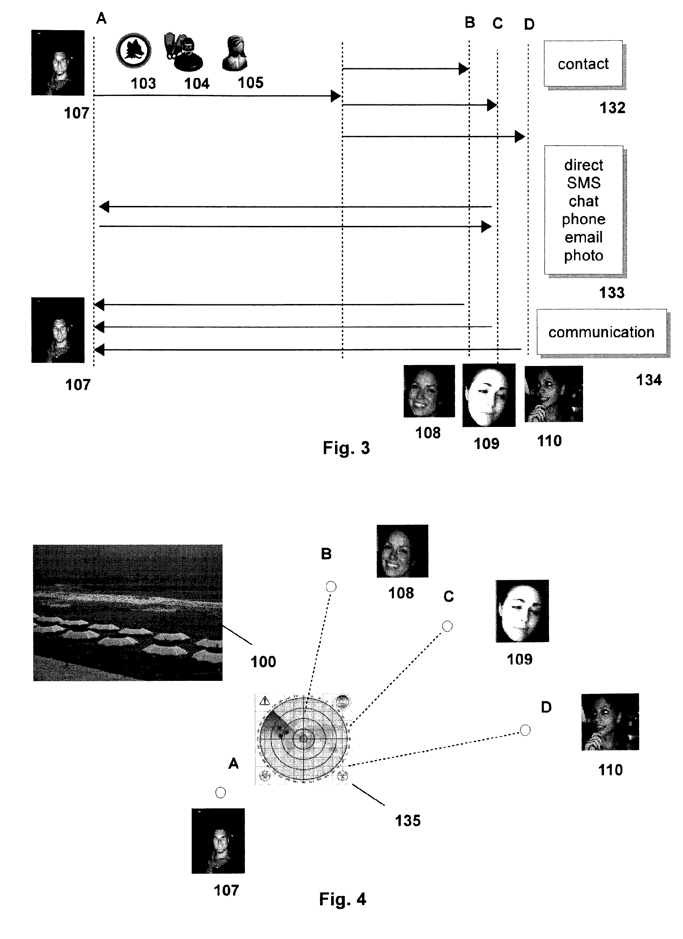

Figure 3 shows that the computer system provides a direct communication, through a system enabling exchange of messages belonging to the same software application 102 (App), or it provides a indirect communication through a system enabling notifications and transmission of contact data (telephone number, email address, internet website, contact by *Skype, Facebook, WhatsApp,* etc.). Firstly, a user 107 defines the task of finding, at the same beach, the female persons 105, living in Rome 104, and having the hobby of fishing by underwater diving 103. Then, he receives a notification that there are three users 108, 109, 110, belonging to the same *social network* and satisfying the above requirements. These users 108, 109, 110 receive a contact request from their respective mobile computing means 101 and accept the possibility to be contacted.

Once the first contact has been established, between calling user 107 and called users 108, 109, 110, each of the called users 108, 109, 110 can choose to follow: a direct communication, and to invite the calling user 107 to meet up immediately; or a indirect communication and to exchange the telephone number, the email address, the internet website, the contact by *Skype, Facebook*, *WhatsApp*, etc., and to continue the communication later.

According to an embodiment of the present invention, the computer system supporting the communication of users 107, 108, 109, 110 located in the same geographical area 100, further comprises:
The computer system provides the selection and search of users 107, 108, 109, 110 belonging to the same *social network*, located in the same geographical area 100, as detected by GPS electronics embedded in said mobile means 101, based on search parameters defined by an advertising company or commercial shops in the area,
associated to some specific personal features searched in registered users.

For example, a shop selling products for underwater diving 112 could be interested in contacting all the users at the beach, belonging to the *social network,* having the hobby of fishing by underwater diving, in order to offer the purchasing of sports wear at discounted prices. Furthermore, a shop selling ice creams 111 could be interested in contacting all the users at the beach, belonging to the *social network,* that have specified in their profile to like the ice cream, in order to offer the purchasing of ice creams at discounted prices.

The computer system provides the matching of features searched in users with information of users profiles, related to users 107, 108, 109, 110 located in the same geographical area 100 that have agreed to receive advertising messages; and provides the visualization of a specific advertising message on said mobile computing means 101.

The use of said software application 102 (App), by each user can be subscribed by payment of a daily fee, a weekly fee, a monthly fee, etc.; otherwise it can be enabled by payment of a specific fee for each access to the same software application 102 (App); otherwise it can be free on condition of agreement to receive advertising messages.

Figure 4 shows that, in case the called users 108, 109, 110, agree, said software application 102 (App) makes a radar system available, embedded in said mobile computing means 101, that achieves a real time navigation to guide a user 107 towards other users 108, 109, 110 belonging to the same *social network* located in the same geographical area 100, as detected by GPS electronics embedded in said mobile means 101.

Furthermore, the present invention defines a process supporting the communication of users 107, 108, 109, 110 located in the same geographical area 100, in order to establish a starting contact leading to a personal communication, said process being **characterized in that** comprising the following steps:
- activation of a *software application* 102 (App), contained in mobile computing means 101, that enables users to access to a remote *server* by *internet* and to interact with other users belonging to the same *social network* that have been previously registered through a registration process assigning them a *login* and *password;*
- storage and selection of users profiles, including information about: personal data (name, family name, address, birth date, etc.); contact data (telephone number, email address, internet website, contact by *Skype, Facebook, WhatsApp*, etc.); personal preferences (political views, religion, sports, sexual orientation, etc.); hobby and interests (books, sports, music, movies, etc.);
- selection and search 106 of users belonging to the same social network, located in the same geographical area 100, as detected by GPS electronics embedded in said mobile means 101, based on search parameters defined by a user, associated to some specific personal features searched in other users;
- matching the features searched other users with information of users profiles, related to users located in the same geographical area 100, where all or part of the users data are visualized on a list of search results, according to some previously selected *privacy* options;
- means of direct communication, through a system enabling exchange of messages belonging to the same software application 102 (App), or means of indirect communication through a system enabling notifications and transmission of contact data (telephone number, email address, internet website, contact by *Skype, Facebook, WhatsApp,* etc.).

Further according to the invention, the process supporting the communication of users 107, 108, 109, 110 located in the same geographical area 100, comprises the following additional steps:
- selection and search of users 107, 108, 109, 110 belonging to the same *social network*, located in the same geographical area 100, as detected by GPS electronics embedded in said mobile means 101, based on search parameters defined by an advertising company or commercial shops in the area, associated to some specific personal features searched in registered users;
- matching the features searched in users with information of users profiles, related to users 107, 108, 109, 110 located in the same geographical area 100 that have agreed to receive advertising messages; and visualization of a specific advertising message on said mobile computing means 101.

The use of said software application 102 (App), by each user can be subscribed by payment of a daily fee, a weekly fee, a monthly fee, etc.; otherwise it can be enabled by payment of a specific fee for each access to the same software application 102 (App); otherwise it can be free on condition of agreement to receive advertising messages.

Once the first contact has been established between calling user 107 and called users 108, 109, 110, each of the called users 108, 109, 110 can choose to follow: a direct communication, and to invite the calling user 107 to meet up immediately; or a indirect communication and to exchange the telephone number, the email address, the internet website, the contact by *Skype, Facebook, WhatsApp*, etc., and to continue the communication later.

In case the called users 108, 109, 110, agree, said software application 102 (App) makes a radar system available, embedded in said mobile computing means 101, that achieves a real time navigation to guide a user 107 towards other users 108, 109, 110 belonging to the same *social network* located in the same geographical area 100, as detected by GPS electronics embedded in said mobile means 101.

Therefore, the above examples show that the present invention achieves all the proposed objectives. In particular, it permits to obtain a computer system using mobile computing means, like in example a *smartphone,* a *tablet PC,* an *iWatch* or a *personal computer,* comprising a software application (App) that enables users to access to a remote *server,* by *internet* connection, so that to achieve the communication of users located in the same geographical area, in order to establish a first contact leading to a personal communication.

Further according to the invention, the computer system uses the systems for detection of position embedded in the mobile computing means, like in example the GPS electronics, in order to find and represent on a map the geographical position of all the users that have been previously submitted to a registration process as belonging to the same *social network.*

Then, the computer system can accept the search requests from users belonging to the same social network, based on search parameters defined by the same users, related to specific personal features of the searched users.

Further, the computer system matches the features searched in the users with the information from the user profiles related to the users located in the same geographical area, and it provides a visualization of the search results, where all or part of the users data are available, according to some previously selected privacy options;

Further according to the invention, the computer system provides a direct communication, through a system enabling exchange of messages belonging to the same software application (App), or an indirect communication through a system enabling notifications and transmission of contact data (telephone number, email address, internet website, contact by *Skype, Facebook, WhatsApp*, etc.).

Furthermore, the computer system can accept the search requests from an advertising company or from commercial shops in the area, related to specific personal features of searched users, that have agreed to receive advertising messages; and that provides a visualization of a specific advertising message on said mobile computing means of the same searched users.

Finally, the computer system comprises a radar system, embedded in said mobile computing means, that achieves a real time navigation to guide a user towards other users belonging to the same *social network* located in the same geographical area.

The present invention has been described for illustrative but not limitative purposes, according to its preferred embodiments, but it is clear that modifications and/or changes can be introduced by those skilled in the art without departing from the relevant scope, as defined in the enclosed claims.

## Claims

1. Computer system supporting the communication of users (107, 108, 109, 110) located in the same geographical area (100), in order to establish a starting contact leading to a personal communication, said system being **characterized in that** comprising:
- mobile computing means (101), like in example a *smartphone,* a *tablet PC*, a *iWatch* or a *personal computer,* comprising a software application (102) (App) that enables users to access to a remote server by internet and to interact with other users belonging to the same *social network* that have been previously registered through a registration process assigning them a *login* and *password*;
- means for storage and selection of users profiles, including information about:
personal data (name, family name, address, birth date, etc.); contact data (telephone number, email address, internet website, contact by *Skype, Facebook*, *WhatsApp*, etc.); personal preferences (political views, religion, sports, sexual orientation, etc.); hobby and interests (books, sports, music, movies, etc.);
- means of selection and search (106) of users belonging to the same *social network*, located in the same geographical area (100), as detected by GPS electronics embedded in said mobile means (101), based on search parameters defined by a user, associated to some specific personal features searched in other users;
- means matching the features searched in other users with information of users profiles, related to users located in the same geographical area (100), where all or part of the users data are visualized on a list of search results, according to some previously selected privacy options;
- means of direct communication, through a system enabling exchange of messages belonging to the same software application (102) (App), or means of indirect communication through a system enabling notifications and transmission of contact data (telephone number, email address, internet website, contact by *Skype, Facebook, WhatsApp*, etc.).

2. Computer system supporting the communication of users (107, 108, 109, 110) located in the same geographical area (100), according to previous claim 1, said system **characterized in that** further comprising:
- means of selection and search of users (107, 108, 109, 110) belonging to the same *social network,* located in the same geographical area (100), as detected by GPS electronics embedded in said mobile means (101), based on search parameters defined by an advertising company or commercial shops in the area, associated to some specific personal features searched in registered users;
- means matching the features searched in users with information of users profiles, related to users (107, 108, 109, 110) located in the same geographical area (100) that have agreed to receive advertising messages; and means visualizing a specific advertising message on said mobile computing means (101).

3. Computer system supporting the communication of users (107, 108, 109, 110) located in the same geographical area (100), according to previous claim 2, said system **characterized in that**:
- the use of said software application (102) (App), by each user can be subscribed by payment of a daily fee, a weekly fee, a monthly fee, etc.; otherwise it can be enabled by payment of a specific fee for each access to the same software application (102) (App); otherwise it can be free on condition of agreement to receive advertising messages.

4. Computer system supporting the communication of users (107, 108, 109, 110) located in the same geographical area (100), according to one or more of previous claims, said system **characterized in that**:
- once the first contact has been established between calling user (107) and called users (108, 109, 110), each of the called users (108, 109, 110) can choose to follow: a direct communication, and to invite the calling user (107) to meet up immediately; or a indirect communication and to exchange the telephone number, the email address, the internet website, the contact by *Skype, Facebook, WhatsApp,* etc., and to continue the communication later.

5. Computer system supporting the communication of users (107, 108, 109, 110) located in the same geographical area (100), according to one or more of previous claims, said system **characterized in that**:
- said software application (102) (App) comprises a radar system, embedded in said mobile computing means (101), that achieves a real time navigation to guide a user (107) towards other users (108, 109, 110) belonging to the same *social network* located in the same geographical area (100), as detected by GPS electronics embedded in said mobile means (101).

6. Process supporting the communication of users (107, 108, 109, 110) located in the same geographical area (100), in order to establish a starting contact leading to a personal communication, said process being **characterized in that** comprising the following steps:
- activation of a *software application* (102) (App), contained in mobile computing means (101), that enables users to access to a remote *server* by *internet* and to interact with other users belonging to the same *social network* that have been previously registered through a registration process assigning them a *login* and *password*;
- storage and selection of users profiles, including information about: personal data (name, family name, address, birth date, etc.); contact data (telephone number, email address, internet website, contact by *Skype, Facebook*, *WhatsApp,* etc.); personal preferences (political views, religion, sports, sexual orientation, etc.); hobby and interests (books, sports, music, movies, etc.);
- selection and search (106) of users belonging to the same social network, located in the same geographical area (100), as detected by GPS electronics embedded in said mobile means (101), based on search parameters defined by a user, associated to some specific personal features searched in other users;
- matching the features searched other users with information of users profiles, related to users located in the same geographical area (100), where all or part of the users data are visualized on a list of search results, according to some previously selected *privacy* options;
- means of direct communication, through a system enabling exchange of messages belonging to the same software application (102) (App), or means of indirect communication through a system enabling notifications and transmission of contact data (telephone number, email address, internet website, contact by *Skype, Facebook, WhatsApp*, etc.).

7. Process supporting the communication of users (107, 108, 109, 110) located in the same geographical area (100), according to previous claim 6, said process **characterized in that** further comprising the following steps:
- selection and search of users (107, 108, 109, 110) belonging to the same *social network,* located in the same geographical area (100), as detected by GPS electronics embedded in said mobile means (101), based on search parameters defined by an advertising company or commercial shops in the area, associated to some specific personal features searched in registered users;
- matching the features searched in users with information of users profiles, related to users (107, 108, 109, 110) located in the same geographical area (100) that have agreed to receive advertising messages; and visualization of a specific advertising message on said mobile computing means (101).

8. Process supporting the communication of users (107, 108, 109, 110) located in the same geographical area (100), according to previous claim 7, said process **characterized in that**:
- the use of said software application (102) (App), by each user can be subscribed by payment of a daily fee, a weekly fee, a monthly fee, etc.; otherwise it can be enabled by payment of a specific fee for each access to the same software application (102) (App); otherwise it can be free on condition of agreement to receive advertising messages.

9. Process supporting the communication of users (107, 108, 109, 110) located in the same geographical area (100), according to previous claim 6, said process **characterized in that** further comprising the following steps:
- once the first contact has been established between calling user (107) and called users (108, 109, 110), each of the called users (108, 109, 110) can choose to follow: a direct communication, and to invite the calling user (107) to meet up immediately; or a indirect communication and to exchange the telephone number, the email address, the internet website, the contact by *Skype, Facebook*, *WhatsApp,* etc., and to continue the communication later.

10. Process supporting the communication of users (107, 108, 109, 110) located in the same geographical area (100), according to previous claim 9, said process **characterized in that** further comprising the following step:
- the user (107) activates a radar system, embedded in said mobile computing means (101), that achieves a real time navigation to guide a user (107) towards other users (108, 109, 110) belonging to the same *social network* located in the same geographical area (100), as detected by GPS electronics embedded in said mobile means (101).
